# EUROPÄISCHE PATENTANMELDUNG

(11) **EP 2 256 479 A2**
(43) Veröffentlichungstag der Anmeldung: **01.12.2010**
(21) Anmeldenummer: 10005553.2
(22) Anmeldetag: 28.05.2010
(51) Int. Cl.: G01N 21/17

(54) **Verfahren zum Nachweisen mehrerer Substanzen eines Gasgemischs durch eine zeitlich aufeinanderfolgende Bestimmung der Einzelkonzentration der Substanzen**

(30) Priorität: 29.05.2009 DE 102009023230
(71) Anmelder: RWE Rhein-Ruhr Netzservice GmbH, 46483 Wesel (DE); PAS-Analytik GmbH, 22405 Hamburg (DE)
(72) Erfinder: Groninga, Hinrich, 22397 Hamburg (DE); Wolff, Marcus, 22149 Hamburg (DE); Beuting, Jürgen, 46499 Hamminkeln (DE); Tabke, Thorsten, 46509 Xanten (DE)
(74) Vertreter: Polypatent

(57) **Zusammenfassung**

Die Erfindung betrifft ein Verfahren und eine Vorrichtung zum Nachweisen mehrerer Substanzen eines Gasgemischs durch eine zeitlich aufeinanderfolgende Bestimmung der Einzelkonzentrationen der Substanzen unter Verwendung einer einzigen Messanordnung mit Hilfe der photoakustischen Spektroskopie. Dabei werden erfindungsgemäß wenigstens zwei wahlweise aktivierbare Strahlungsquellen und/oder eine durch Filterung eines von wenigstens einer Strahlungsquelle abgegebenen Strahlungsspektrums erzeugte Strahlung verwendet.

## Beschreibung

Die Erfindung betrifft ein Verfahren zum Nachweisen mehrerer Substanzen eines Gasgemischs durch eine zeitlich aufeinanderfolgende Bestimmung der Einzelkonzentration der Substanzen unter Verwendung einer einzigen Messanordnung.

Die Erfindung betrifft weiterhin eine Vorrichtung zum Nachweisen mehrerer Substanzen eines Gasgemischs durch eine zeitlich aufeinanderfolgende Bestimmung der Einzelkonzentration der Substanzen unter Verwendung einer einzigen Messanordnung.

Die Erfindung dient beispielsweise zur Analyse von Schwefelhexafluorid (SF6-Gas), welches als Isolier- und/oder Löschgas für elektrische Betriebsmittel verwendet wird, insbesondere für elektrische Hochspannungsbetriebsmittel, wie beispielsweise Leistungsschalter. Die durchgeführten Messungen sind dabei Bestandteil von Montage, Demontage, Wartungs- und Instandsetzungsprozessen, Erstdiagnosen im Fehlerfall sowie im SF6-Recyclingprozess, wobei die Messung im Regelfall vor Ort in den Schaltanlagen durchgeführt werden.

Während der zuvor genannten Messungen werden beispielsweise der Volumen-%-Satz des SF6-Gases im Gesamtgasvolumen, der Feuchtigkeitsgehalt sowie die stabilen, gasförmigen Zersetzungsprodukte Fluorwasserstoff (HF) und Schwefeldioxid (SO₂) des Schwefelhexafluorids bestimmt. Mittels dieser Parameter lassen sich Rückschlüsse auf die Durchschlagsfestigkeit des Gasgemischs in dem elektrischen Betriebsmittel oder auf das Kontaktverhalten des elektrischen Betriebsmittels schließen.

Aus dem Stand der Technik ist es beispielsweise bekannt, den Feuchtigkeitsgehalt sowie die stabilen gasförmigen Zersetzungsprodukte Fluorwasserstoff und Schwefeldioxid des Schwefelhexafluorids mittels sog. Messröhrchen zu bestimmen. Jedoch ist eine Bestimmung des Volumen-%-Satzes des SF6-Gases im Gesamtgasvolumen mittels Messröhrchen nicht möglich, so dass zur Bestimmung des Volumen-%-Satzes des SF6-Gases im Gesamtgasvolumen eine weitere Messvorrichtung benötigt wird. Weitere Nachteile dieser Messmethode sind die hohe Messungenauigkeit und die aufwändige Bedienung der Messvorrichtung.

Weiterhin ist die Verwendung mehrerer Messvorrichtungen kostenintensiv, insbesondere durch die Anschaffungskosten, die Dauer der Messung, Pflegebedarf der Messvorrichtung und Schulungen des Personals auf die Messvorrichtung.

Des weiteren ist es aus dem Stand der Technik bekannt, eine Gasprobe mittels einer photoakustischen Spektroskopie zu analysieren. Bei der photoakustischen Spektroskopie wird eine Gasprobe mit Lichtimpulsen bestrahlt, wobei die Wellenlänge des Lichts derjenigen Frequenz der gesuchten Stoffmoleküle entspricht, die eine Anhebung der Gesamtenergie des Moleküls erlaubt. Somit werden die Moleküle des gesuchten Stoffs während des Lichtimpulses angeregt. In den Zeiträumen zwischen den Lichtimpulsen geben die angeregten Moleküle die Energie in Form von Wärme ab. Die daraus resultierende Erwärmung in der Messzelle führt zu einem Druckanstieg in der Messzelle. Pulsierende Druckerhöhungen, wie sie durch die Lichtimpulse erzeugt werden, resultieren in einer Schallwelle. Durch Messung der Schallwellenamplitude, beispielsweise mittels eines Mikrofons, kann auf die Konzentration des gesuchten Stoffes geschlossen werden.

Aus dem Dokument DE 10 2004 053 480 B3 ist es bekannt, dass die Modulation des Strahlers bei der photoakustischen Spektroskopie derart erfolgt, dass in der Messzelle eine stehende longitudinale Schallwelle erzeugt wird, und dass die Detektion der Schallwelle mit dem Schallaufnehmer am Ort einer konstruktiven Interferenz der Resonanz erfolgt.

Aus der DE 196 38 761 A1 ist die Verwendung eines Infrarotstrahlers in Verbindung mit einem rohrförmigen Zerhacker, der den Infrarotstrahler in seinem Inneren aufnimmt, bekannt. Dabei kann das Fenster, durch das die Strahlung in die Messzelle eintritt, als Filter ausgebildet sein, um die von dem Infrarotstrahler abgegebene Strahlung auf die Frequenz der gesuchten Stoffmoleküle zu begrenzen.

Die Verwendung einer Laserdiode als Strahlungsquelle bei der photoakustischen Spektroskopie, deren Emissionswellenlänge, modensprungfrei durchstimmbar ist, ist aus der DE 103 08 409 A1 bekannt.

Allen zuvor genannten Verfahren zur photoakustischen Spektroskopie ist es gemein, dass die Verfahren nur begrenzt an die zu analysierenden Substanzen in einem Gasgemisch angepasst werden können. So ist beispielsweise die Laserdiode aus der DE 103 08 409 A1 nur innerhalb eines sehr begrenzten Emissionswellenlängenbereichs durchstimmbar. Bei der Anordnung gemäß DE 103 08 409 A1 müsste das Fenster in der Messzelle für jede nachzuweisende Substanz in dem Gasgemisch ausgetauscht werden.

Der Erfindung liegt die Aufgabe zugrunde, die bereits aus dem Stand der Technik bekannten Verfahren und Vorrichtungen zum Nachweisen von Substanzen eines Gasgemischs bzgl. ihrer Messgenauigkeit und des möglichen Einsatzbereichs zu verbessern.

Die der Erfindung zugrunde liegende Aufgabe wird gelöst durch ein Verfahren zum Nachweisen mehrerer Substanzen eines Gasgemischs durch eine zeitlich aufeinanderfolgende Bestimmung der Einzelkonzentrationen der Substanzen unter Verwendung einer einzigen Messanordnung, jeweils umfassend die Schritte:
- Einschließen einer Probe des Gasgemischs in einer Messzelle,
- Hindurchleiten einer modulierten Strahlung durch die Messzelle, wobei die Wellenlänge der hindurchgeleiteten Strahlung auf jeweils eine Absorptionslinie der Substanzen abgestimmt wird,
- Detektieren der durch Absorption der Strahlung erzeugten Schallwelle mit einem Mikrofon,
- Phasenempfindliches Verstärken des Mikrofonsignals, und
- Bestimmen der Einzelkonzentration einer der Substanzen innerhalb des Gasgemischs durch Auswerten des verstärkten Mikrofonsignals in einer Auswerteeinheit, wobei die Bestimmung der Einzelkonzentration der Substanzen unter Verwendung wenigstens zweier wahlweise aktivierbarer Strahlungsquellen und/oder durch Filterung eines von wenigstens einer Strahlungsquelle abgegebenen Strahlungsspektrums durchgeführt werden.

Die Verwendung zweier wahlweise aktivierbarer Strahlungsquellen hat den Vorteil, dass von den zwei Strahlungsquellen ein breiteres Strahlungsspektrum abgedeckt wird als von einer Strahlungsquelle. Die wenigstens zwei Strahlungsquellen sind wahlweise aktivierbar, damit zu einem Zeitpunkt nur eine der zwei Strahlungsquellen in die Messzelle strahlt. Strahlen mehr als eine Strahlungsquelle zur selben Zeit in die Messzelle, so ist eine eindeutige Bestimmung der Einzelkonzentration einer Substanz des Gasgemischs nicht möglich, da unter Umständen neben den Molekülen der zu bestimmenden Substanz noch Moleküle einer weiteren Substanz in dem Gasgemisch angeregt werden. Alternativ zu den wenigstens zwei Strahlungsquellen kann eine Strahlungsquelle verwendet werden, die ein Strahlungsspektrum abgibt, wobei dieses Strahlungsspektrum gefiltert wird. Eine Strahlungsquelle, die ein Strahlungsspektrum abgibt ist in der Lage, Moleküle mehrere Substanzen innerhalb des Gasgemischs anzuregen, so dass grundsätzlich die angeregten Substanzen nachweisbar sind. Die Filterung des Strahlungsspektrums dient dazu, zu einem Zeitpunkt nur Moleküle einer Substanz innerhalb des Gasgemischs anzuregen, so dass das Messergebnis nicht durch die anderen Substanzen in dem Gasgemisch beeinflusst wird.

Vorzugsweise erfolgt die Ausgabe der Messergebnisse in Form von Konzentrationen der gemessenen Substanzen. Um die Messgenauigkeit des Verfahrens zu erhöhen, wird die Messung bei ruhender Gasprobe/Gasatmosphäre durchgeführt.

Nach einer bevorzugten Ausführungsform strahlen die wenigstens zwei Strahlungsquellen jeweils eine Strahlung unterschiedlicher Wellenlänge ab. Alternativ strahlt die wenigstens eine Strahlungsquelle eine Strahlung mit einem Strahlungsspektrum ab. Dies hat den Vorteil, dass wenigstens zwei Strahlungen mit unterschiedlicher Wellenlänge zur Anhebung der Gesamtenergie der gesuchten Stoffmoleküle zur Verfügung stehen. Das von der wenigstens einen Strahlungsquelle abgegebene Strahlungsspektrum kann durch Filterung in Strahlungen mit unterschiedlicher Wellenlänge unterteilt werden, wobei das Strahlungsspektrum vorzugsweise auf die Wellenlänge gefiltert wird, die derjenigen Frequenz der gesuchten Stoffmoleküle entspricht, die eine Anhebung der Gesamtenergie des Stoffmoleküls erlaubt. Somit können wenigstens zwei Substanzen eines Gasgemischs durch eine zeitlich aufeinanderfolgende Bestimmung der Einzelkonzentration der Substanzen unter Verwendung einer einzigen Messanordnung nachgewiesen werden.

Zweckmäßigerweise umfassen die Strahlungsquellen wenigstens eine Laser-Strahlungsquelle und/oder eine Infrarot-Strahlungsquelle. Laser-Strahlungsquellen haben den Vorteil, dass sie eine Strahlung einer bestimmten Wellenlänge abgeben, die ohne Filterung zur Anregung der Stoffmoleküle einer gesuchten Substanz verwendet werden können. Infrarot-Strahlungsquellen haben den Vorteil, dass sie eine Strahlung mit einem breiten Strahlungsspektrum abgeben, welches durch Filterung auf eine Wellenlänge innerhalb des Strahlungsspektrums begrenzt werden kann, so dass theoretisch jede Wellenlänge innerhalb des Strahlungsspektrums zur Anregung der Stoffmoleküle der gesuchten Substanz zur Verfügung steht. Da Laser-Strahlungsquellen und Infrarot-Strahlungsquellen in unterschiedlichen Wellenlängenbereichen abstrahlen, ist auch eine gleichzeitige Verwendung von einer Laser-Strahlungsquelle und einer Infrarot-Strahlungsquelle innerhalb einer Messanordnung denkbar, wobei jedoch zu einem Zeitpunkt lediglich eine Strahlungsquelle in die Messzelle strahlt.

Nach einer bevorzugten Ausführungsform wird die Temperatur der Strahlungsquelle oder die Temperaturen der Strahlungsquellen gemessen. Die gemessene Temperatur wird der Auswerteeinheit zugeführt. In der Auswerteeinheit sind Abstrahlungseigenschaften der Strahlungsquelle für unterschiedliche Temperaturen hinterlegt, so dass die Auswerteeinheit die aktuellen Abstrahlungseigenschaften bei der Bestimmung der Konzentration der zu erkennenden Substanz berücksichtigen kann. Dadurch wird die Zeit bis zur ersten Messung, d. h. die Bereitschaftsdauer reduziert, da nicht mit der ersten Messung gewartet werden muss, bis die Strahlungsquelle ihre optimale Betriebstemperatur erreicht hat.

Bei einer modulierten Strahlung im Sinne der Erfindung handelt es sich um eine gepulste Strahlung oder um eine ihre Intensität ändernde Strahlung, wobei zu den Zeiten der Strahlungsimpulse oder einer hohen Strahlungsintensität die Gesamtenergie der Stoffmoleküle der zu messenden Substanz des Gasgemischs angehoben wird und zu Zeiten zwischen den Strahlungsimpulsen oder zu Zeiten einer niedrigen Strahlungsintensität die angeregten Stoffmoleküle der zu messenden Substanz des Gasgemischs die Energie in Form von Wärme abgeben.

Nach einer bevorzugten Ausführungsform der Erfindung wird die Strahlung wenigstens einer der Strahlungsquellen mittels des Betriebsstroms oder der Betriebstemperatur der Strahlungsquelle moduliert. Des weiteren kann die Strahlung wenigstens einer der Strahlungsquellen mittels eines Zerhackers moduliert werden.

Zweckmäßigerweise wird die Strahlung wenigstens einer der Strahlungsquellen mittels eines Filters auf die Wellenlänge einer Absorptionslinie der nachzuweisenden Substanz begrenzt. Dadurch wird während der Lichtimpulse die Gesamtenergie der Stoffmoleküle der nachzuweisenden Substanz angehoben, die sie während der Zeitintervalle zwischen den Lichtimpulsen in Form von Wärmeenergie abgeben.

Nach einer bevorzugten Ausführungsform der Erfindung werden die Eigenschaften des Filters an die Absorptionslinie der nachzuweisenden Substanz angepasst. Je nach nachzuweisender Substanz werden die Eigenschaften des Filters so angepasst, dass lediglich Stoffmoleküle der gesuchten Substanz angeregt werden. Somit können die Einzelkonzentrationen mehrerer Substanzen eines Gasgemischs durch aufeinanderfolgende Bestimmung der Einzelkonzentration mittels des anpassbaren Filters bestimmt werden.

In einer zweckmäßigen Ausführungsform ist der Filter als drehbar gelagerte Scheibe mit unterschiedlichen Filterelementen ausgebildet, wobei durch eine Drehung des Filters die unterschiedlichen Filterelemente zwischen der Strahlungsquelle und der Messzelle angeordnet werden können.

Zweckmäßigerweise wird ein als Isolier- und/oder Löschgas für elektrische Betriebsmittel verwendetes Gasgemisch mit dem erfindungsgemäßen Verfahren untersucht. Insbesondere wird wenigstens eine der Zersetzungssubstanzen des Isolier- und/oder Löschgases nachgewiesen, die sich über die Zeit bilden und/oder die durch die Beanspruchung des Isolier- und/oder Löschgases entstehen. Die bei einem Isolier- und/oder Löschgas nachzuweisenden Substanzen umfassen eine oder mehrere der folgenden Substanzen: Schwefelhexafluorid, Fluorwasserstoff, Schwefeldioxid, Wasser, Kohlenmonoxid, Kohlendioxid oder weitere gasförmige Isolier- oder Löschmittel enthaltend Bestandteile von Methan, Ethan, Ethen, Acetylen.

Nach einer bevorzugten Ausführungsform wird zuerst die Konzentration an Schwefelhexafluorld In dem Gasgemisch bestimmt, da die Konzentration an Schwefelhexafluorid bei Verwendung des Gasgemischs als Isolier- und/oder Löschgas unter normalen Betriebsbedingungen am größten ist.

Um die Messgenauigkeit weiter zu erhöhen, wird das Gasgemisch mehrfach überprüft, bevor ein Messergebnis angezeigt wird, vorzugsweise wird das Gasgemisch dreimal überprüft.

Nach einem bevorzugten Ausführungsbeispiel wird die Messzelle in einer akustischen Resonanz betrieben, so dass die Absorption der hindurchgeleiteten Strahlung durch die nachzuweisende Substanz auf einem Maximum ist. Dadurch wird die Messgenauigkeit des erfindungsgemäßen Verfahrens weiter verbessert.

Nach einem alternativen Ausführungsbeispiel wird die Messzelle in einer akustischen Resonanz oder einer nicht akustischen Resonanz betrieben, vorzugsweise wird die Messzelle mittels einer ersten Strahlungsquelle in einer akustischen Resonanz betrieben und mittels einer zweiten Messzelle in einer nicht akustischen Resonanz, wobei besonders bevorzugt die erste Strahlungsquelle als Laser ausgebildet ist und die zweite Strahlungsquelle als Breitbandstrahlungsquelle ausgebildet ist.

Die Erfindung wird weiterhin gelöst durch eine Vorrichtung zum Nachweisen mehrer Substanzen eines Gasgemischs durch eine zeitlich aufeinanderfolgende Bestimmung der Einzelkonzentrationen der Substanzen unter Verwendung einer einzigen Messanordnung, umfassend: eine Messzelle zur Aufnahme des zu überprüfenden Gasgemischs, wobei die Messzelle wenigstens ein strahlungsdurchlässiges Fenster aufweist und im Wesentlichen gasdicht ist, ein innerhalb der Messzelle befindliches Mikrofon zur Aufnahme einer durch Absorption einer modulierten Strahlung erzeugten Schallwelle, einen mit dem Mikrofon verbunden phasenempfindlichen Verstärker zur Verstärkung der von dem Mikrofon erzeugten Signale, eine mit dem phasenempfindlichen Verstärker verbundene Auswerteeinheit zur Auswertung der von dem Verstärker verstärkten Signale, die sich dadurch auszeichnet, dass die Vorrichtung wenigstens zwei Strahlungsquellen und/oder wenigstens eine Strahlungsquelle mit einem Strahlungsspektrum und einen zwischen Strahlungsquelle und Messzelle angeordneten Filter umfasst, wobei der Filter das von der Strahlungsquelle abgegebene Strahlungsspektrum auf ein vorgebbaren / vorbestimmten Wert / Bereich beschränkt.

Die Strahlungsquelle mit einem Strahlungsspektrum ist vorzugsweise einem sogenannten schwarzen Strahler angenähert, welcher eine ideale thermische Strahlungsquelle darstellt, die elektromagnetische Strahlung mit einem charakteristischen, nur von der Temperatur abhängigen Spektrum aussendet.

Vorteilhaft an der Vorrichtung ist, dass diese bei unterschiedlichen Umgebungsdrücken und -temperaturen zuverlässige Messergebnisse liefert. Weitere Vorteile sind die geringen Abmaße der Vorrichtung und der geringe Bedarf an Gasgemisch, das zur Bestimmung der Einzelkonzentrationen der nachzuweisenden Substanzen benötigt wird.

Vorzugsweise ist die erfindungsgemäße Vorrichtung zum Nachweisen mehrerer Substanzen eines Gasgemischs tragbar ausgebildet, insbesondere sind in eine solche tragbare Vorrichtung die Auswerteeinheit und eine Anzeigevorrichtung integriert.

Nach einem bevorzugten Ausführungsbeispiel der Erfindung ist zwischen wenigstens einer Strahlungsquelle und der Messzelle ein Zerhacker angeordnet. Mittels des Zerhackers wird die Strahlung der Strahlungsquelle moduliert, vorzugsweise gepulst. Dadurch wird erreicht, dass die Gesamtenergie der Stoffmoleküle der gesuchten Substanz während der Lichtimpulse angehoben wird und dieses angeregte Molekül die aufgenommene Energie in Form von Wärme während der Zeiten zwischen den Strahlungsimpulsen abgibt. Die aus der Wärmeerhöhung resultierende Druckerhöhung wird mit Hilfe eines Mikrofons erkannt und über einen Verstärker an eine Auswerteeinheit weitergegeben.

Vorzugsweise ist der Zerhacker als drehbare Lochscheibe ausgebildet. Besonders bevorzugt ist der als drehbare Lochscheibe ausgebildete Zerhacker in unmittelbarer Nähe zur Strahlungsquelle angeordnet, da die Rotation der Lochscheibe der Strahlungsquelle einen kühlenden Luftstrom zuführen kann.

Nach einer bevorzugten Ausführungsform der Erfindung weist der als Lochscheibe ausgebildete Zerhacker neben den Löchern zum Zerhacken/Modulieren der von der Strahlungsquelle abgegebenen Strahlung noch weitere vorzugsweise auf einer kreisrunden Bahn mit konstantem Radius angeordnete Synchronisationslöcher auf, mittels welcher erkannt werden kann, ob ein Loch zum Zerhacken/Modulieren vor der Strahlungsquelle angeordnet ist oder nicht. Vorzugsweise sind die Synchronisationslöcher kleiner ausgebildet, als die Löcher zum Zerhacken/Modulieren der Strahlung. Weiter bevorzugt ist die Anzahl der Synchronisationslöcher größer als die Anzahl der Löcher zum Zerhacken/Modulieren, vorzugsweise zwei bis acht mal größer.

Die von dem innerhalb der Messzelle befindlichen Mikrofon aufgenommenen Signale und ein durch eine Synchronisationserkennungseinheit mittels der Synchronisationslöcher des Zerhackers erzeugte Synchronisationssignal werden einer Synchronisationseinheit zugeführt, welche das Mikrofonsignal nur den phasenempfindlichen Verstärker weiterleitet, wenn keine Strahlung in die Messzelle gelangt und die angeregten Moleküle der zu erkennenden Stoffmoleküle die gespeicherte Energie in Form von Wärme abgeben. Dadurch wird die Messgenauigkeit der erfindungsgemäßen Vorrichtung weiter verbessert.

Nach einer weiteren Ausführungsform der Erfindung ist die Strahlung wenigstens einer Strahlungsquelle durch den Betriebsstrom und/oder der Betriebstemperatur der Strahlungsquelle modulierbar.

In einer Ausführungsform der Erfindung umfasst die Vorrichtung wenigstens zwei unterschiedliche Strahlungsquellen, wobei die Strahlungsquellen eine Strahlung mit unterschiedlicher Wellenlänge und/oder unterschiedlichen Strahlungsspektren abstrahlen. Die Bereitstellung von wenigstens zwei Strahlungsquellen mit unterschiedlicher Wellenlänge und/oder unterschiedlichen Strahlungsspektren dient dabei der Erhöhung der nachweisbaren Substanzen eines Gasgemischs, wobei jede nachzuweisende Substanz durch eine unterschiedliche Wellenlänge angeregt wird.

Zweckmäßigerweise ist eine Strahlungsquelle als Laser-Strahlungsquelle ausgebildet und/oder wenigstens eine Strahlungsquelle als Infrarot-Strahlungsquelle.

Vorzugsweise weist die Laser-Strahlungsquelle eine Frequenz von kleiner 10 MHz auf und erzeugt eine Strahlung mit einer Wellenlänge von 2 - 3 µm.

Die Infrarot-Strahlungsquelle erzeugt vorzugsweise eine Strahlung mit einer Wellenlänge von 2 - 14 µm. Das zwischen der Infrarot-Strahlungsquelle und Messzelle angeordnete Filter ist dabei so ausgebildet, dass es die Strahlung der Infrarot-Strahlungsquelle in einem Bereich von 10 - 200 µm filtern kann.

### [Anmerkung: Werte überprüfen!]

Zweckmäßigerweise weist die Strahlungsquelle eine Abschirmung auf, vorzugsweise eine Glas- oder Kunststoffscheibe.

Nach einer bevorzugten Ausführungsform der Erfindung ist das Filter veränderbar, vorzugsweise ist das Filter als Drehscheibe ausgebildet, umfassend mehrere Filterelemente, die durch eine Drehung der Drehscheibe zwischen Messzelle und Strahlungsquelle bewegbar sind. Somit kann durch eine einfache Drehung der Drehscheibe ein ausgewähltes Filterelement zwischen Strahlungsquelle und Messzelle angeordnet werden, wodurch die von der Strahlungsquelle abgegebene Strahlung auf eine bestimmte Wellenlänge beschränkt wird, wodurch die Stoffmoleküle einer gesuchten Substanz in der Messzelle angeregt werden. Soll die Einzelkonzentration einer anderen Substanz nachgewiesen werden, so kann durch eine einfache Drehung der Drehscheibe das Filter so angepasst werden, dass lediglich eine Strahlung mit einer Wellenlänge in die Messzelle gelangt, die die Stoffmoleküle der neu nachzuweisenden Substanz anregt.

Zweckmäßigerweise umfasst das als Drehscheibe ausgebildete Filter zusätzliche Schlitze in der Drehscheibe zur Erkennung einer Winkelstellung der Drehscheibe. Die zusätzlichen Schlitze wirken beispielsweise mit einer optischen Erkennungseinrichtung zusammen, welche durch ein Zählen der bei einer Drehung der Drehscheibe an der Erkenneinrichtung vorbeigelaufenen Schlitze zählt. Somit kann jederzeit die aktuelle Winkelstellung der Drehscheibe erkannt werden, woraus sich das aktuell von der Strahlungsquelle befindliche Filterelement bestimmen lässt.

Zweckmäßigerweise umfasst die Vorrichtung eine Laserdioden-Strahlungsquelle und eine breitbandige Infrarot-Strahlungsquelle, wobei die beiden Strahlungsquellen an gegenüberliegenden Seiten der Messzelle angeordnet sind und wobei die Messzelle zwei strahlungsdurchlässige Fenster aufweist, die jeweils einer der Strahlungsquellen zugewandt sind. Dabei ist darauf zu achten, dass während der Bestimmung der Einzelkonzentration einer Substanz nur eine Strahlung mit einer bestimmten Wellenlänge in die Messzelle gelangt. Da die Strahlungsquellen vorzugsweise Strahlungen unterschiedlicher Wellenlänge abgeben, ist es besonders zweckmäßig, wenn während der Bestimmung der Einzelkonzentration einer Substanz nur die Strahlung einer Strahlungsquelle in die Messzelle gelangt.

Nach einem besonders bevorzugten Ausführungsbeispiel der Erfindung umfasst die Vorrichtung zwei Messzellen unterschiedlicher Größe, um unterschiedliche Konzentrationen der nachzuweisenden Substanzen jeweils in verschiedenen Messzellen machzuweisen. Es hat sich herausgestellt, dass hohe Konzentrationen besser in kleinen Messzellen und niedrige Konzentrationen in größeren Messzellen nachgewiesen werden können. Dies ist insbesondere bei nachzuweisenden Substanzen vorteilhaft, die in unterschiedlichen Konzentrationsbereichen ein Absorptionsmaximum aufweisen, sodass eine eindeutige Bestimmung der Einzelkonzentration mittels einer gleichzeitigen Bestimmung des Konzentrationsbereichs erfolgt.

Nach einem Ausführungsbeispiel der Erfindung sind mittels der kleineren Messzelle Konzentrationen von eins zu einer Million, ppm, und/oder mittels der größeren Messzelle Konzentrationen von eins zu hundert, %, nachweisbar.

Dazu können die beiden Messzellen hintereinander oder parallel in Bezug auf die einfallende Strahlung angeordnet sein. Im ersten Fall wird die Strahlung zuerst durch eine Messzelle hindurch geleitet und nach dem Austritt aus dieser Messzelle in die zweite Messzelle. Im zweiten Fall wird die Strahlung einer Strahlungsquelle gleichzeitig durch beide Messzellen hindurch geleitet.

Zweckmäßigerweise kann eine der beiden Messzellen als Gasfilter ausgebildet sein, um einzelne Substanzen aus dem Gasgemisch auszufiltem. Vorzugsweise ist die kleinere Messzelle als Gasfilter ausgebildet.

Nach einem bevorzugten Ausführungsbeispiel der Erfindung ist wenigstens eine Messzelle in einem zusätzlichen Gehäuse gekapselt, wobei das Innere des zusätzlichen Gehäuses evakuiert oder mit Schwefelhexafluorid, SF₆ oder Stickstoff N₂, oder einem anderen Gas gefüllt ist. Dadurch wird vorteilhafterweise eine zusätzliche akustische Dämpfung erreicht, wodurch die Messgenauigkeit der Vorrichtung verbessert wird. Die Messgenauigkeit wird weiter dadurch verbessert, dass das Innere des zusätzlichen Gehäuses evakuiert oder mit einem Gas gefüllt ist, wodurch die Übertragung von Schallwellen (Störgeräuschen) außerhalb der Messzelle zur bzw. in die Messzelle verringert wird.

Das Verfahren und die Vorrichtung sind dafür ausgelegt, mehrere Substanzen des Gasgemischs aus einem Volumen zu messen, in welchem ein Druck zwischen 0,5 bar und 11 bar vorherrscht.

Bei einer zweckmäßigen Ausgestaltung der Vorrichtung gemäß der Erfindung kann wenigstens eine Messzelle an wenigstens eine Förderpumpe angeschlossen sein. Die Förderpumpe kann beispielsweise einer Messzelle nachgeschaltet sein. Diese ermöglicht einerseits das Einströmen bzw. Einleiten eines Gases aus dem Volumen, wenn in diesem bezogen auf die Atmosphäre ein nur geringer Überdruck vorherrscht, andererseits wird durch aktives Ansauen des zu analysierenden Gases eine gleichmäßige Durchflutung der Messzelle bewirkt. Schließlich ist ein "Spülen" der Messzelle möglich.

Zweckmäßigerweise ist der Eingang und/oder Ausgang der Messzelle mit einem Ventil versehen, um die Leitung zu der Messzelle und/oder die Leitung aus der Messzelle zu öffnen bzw. zu schließen.

Um die Messgenauigkeit weiter zu erhöhen, ist zwischen dem Volumen, welches das zu analysierende Gasgemisch enthält, und der Messzelle ein Eingangsfilter angeordnet, welches das Gasgemisch von Verunreinigungen, wie beispielsweise Staubpartikeln, reinigt.

Bei einer vorteilhaften Variante des Verfahrens wird die Messzelle vor der Messung mehrmals mit dem zu analysierenden oder einem anderen definierten Gasgemisch durchflutet, vorzugsweise viermal. Bei der Vorrichtung nach der Erfindung können durch Auslösen der Messung mehrere nach einem vorgegebenen Programm initiierte Spülzyklen durchgeführt werden. Nachfolgend wird die Erfindung anhand von Ausführungsbeispielen näher erläutert.

Es zeigen:
- Figur 1: eine Vorrichtung mit einer Strahlungsquelle und einem Filter,
- Figur 2: eine Vorrichtung mit zwei Strahlungsquellen, und
- Figur 3: hydraulisches Schaltbild einer erfindungsgemäßen Vorrichtung.

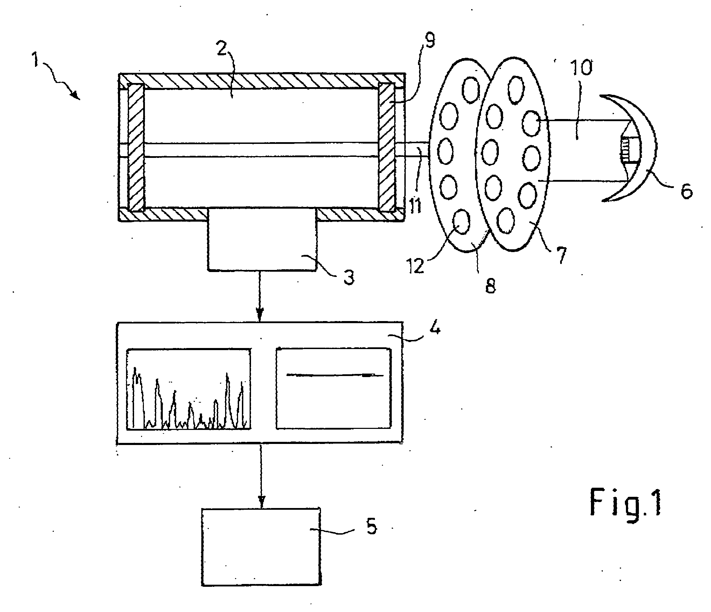

Die in Figur 1 dargestellte Messvorrichtung 1 zum Nachweisen mehrerer Substanzen eines Gasgemischs durch eine zeitlich aufeinanderfolgende Bestimmung der Einzelkonzentration der Substanzen unter Verwendung einer einzigen Messanordnung umfasst eine Messzelle 2 zur Aufnahme des zu überprüfenden Gasgemischs, ein innerhalb der Messzelle 2 befindliches Mikrofon 3, einen mit dem Mikrofon 3 verbundenen phasenempfindlichen Verstärker 4, eine mit dem phasenempfindlichen Verstärker 4 verbundene Auswerteeinheit 5, eine Strahlungsquelle 6 mit einem Strahlungsspektrum, einen Zerhacker 7, und einen zwischen Strahlungsquelle 6 und Messzelle 2 angeordneten Filter 8. Die Messzelle ist im Wesentlichen gasdicht und weist an einer Seite ein strahlungsdurchlässiges Fenster 9 auf. Das Mikrofon 3 ist innerhalb der Messzelle 2 angeordnet und dient zur Aufnahme einer durch Absorption einer modulierten Strahlung erzeugten Schallwelle. Es ist jedoch auch möglich, dass das Mikrofon 3 am Gehäuse der Messzelle 2 angeordnet ist, so lange es eine durch Druckänderung in der Messzelle 2 erzeugte Schallwelle aufnehmen kann. Das Mikrofon 3 ist mit einem phasenempfindlichen Verstärker 4 verbunden, welcher die vom Mikrofon 3 erzeugten Signale verstärkt. Die verstärkten Signale werden von dem Verstärker 4 an eine Auswerteeinheit 5 weitergeleitet.

Die Strahlungsquelle 6 erzeugt eine Strahlung mit einem Strahlungsspektrum, beispielsweise eine Infrarot-Strahlung mit einem Strahlungsspektrum zwischen 780 nm und 1 mm. Die Strahlungsquelle 6 ist so ausgerichtet, dass die Strahlung 10 durch das Fenster 9 in die Messzelle 2 gelangt. Zwischen Strahlungsquelle 6 und Messzelle 2 ist ein Zerhacker 7 angeordnet, der die kontinuierliche Strahlung 10 in eine gepulste Strahlung 11 moduliert. Weiterhin ist zwischen der Strahlungsquelle 6 und der Messzelle 2 ein als Drehscheibe ausgebildetes Filter 8 angeordnet. Das Filter 8 umfasst mehrere Filterelemente 12, die durch eine Drehung des als Drehscheibe ausgebildeten Filters 8 zwischen Messzelle 2 und Strahlungsquelle 6 bewegbar sind. In Abhängigkeit von dem Filterelement 12, das zwischen der Strahlungsquelle 6 und der Messzelle 2 angeordnet ist, wird das Strahlungsspektrum der Strahlung 10 oder der gepulsten Strahlung 11 auf eine bestimmte Wellenlänge gefiltert. Die Reihenfolge des Zerhackers 7 und des als Drehscheibe ausgebildeten Filters 8 zwischen der Strahlungsquelle 6 und der Messzelle 2 ist beliebig. Die durch das Fenster 9 in die Messzelle 2 einfallende Strahlung 11 ist gepulst und auf einen durch das Filter 8 bestimmten Wert bzw. engen Wellenlängenbereich beschränkt. Die Wellenlänge der gepulsten Strahlung 11 ist dabei auf mindestens eine Absorptionslinie der nachzuweisenden Substanz innerhalb des Gasgemischs abgestimmt. Durch die Absorption der Strahlung 11 durch die nachzuweisende Substanz werden deren Moleküle angeregt. In den Zeiträumen zwischen den einzelnen Impulsen der gepulsten Strahlung 11 geben die Moleküle die aufgenommene Energie in Form von Wärme ab, wodurch innerhalb der Messzelle 2 eine Druckerhöhung stattfindet. Mittels der gepulsten Strahlung 11 wird eine Schallwelle erzeugt, die durch das Mikrofon 3 aufgenommen wird. Das von dem Mikrofon 3 erzeugte Signal wird über den phasenempfindlichen Verstärker 4 an eine Auswerteeinheit 5 geleitet, welche anhand des verstärkten Mikrofonsignals die Konzentration der nachzuweisenden Substanz in dem Gasgemisch bestimmt.

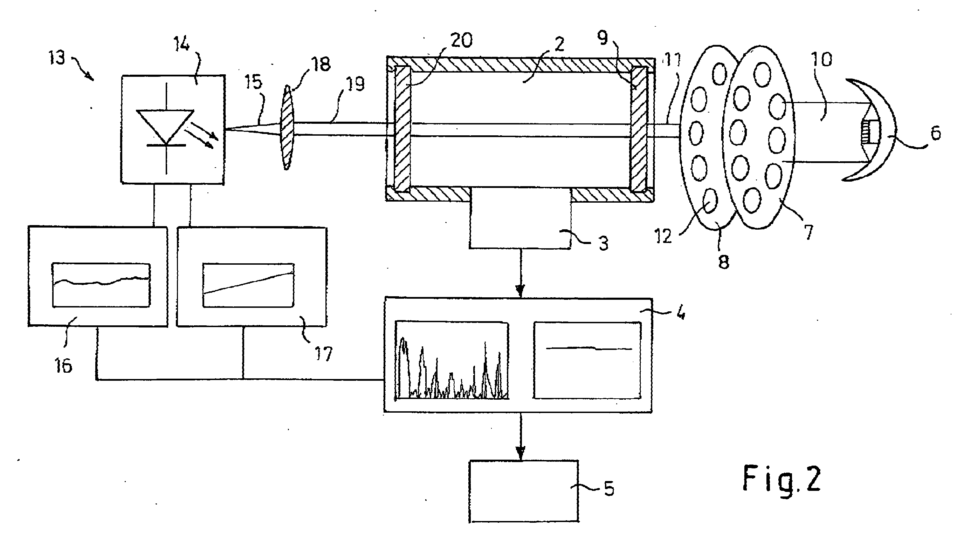

In Figur 2 ist eine zweite Messvorrichtung 13 zum Nachweisen mehrerer Substanzen eines Gasgemischs durch eine zeitlich aufeinanderfolgende Bestimmung der Einzelkonzentrationen der Substanzen dargestellt. Zusätzlich zu der Messvorrichtung 1 nach Figur 1 weist die zweite Messvorrichtung 13 eine Laser-Strahlungsquelle 14 auf. Die Laser-Strahlungsquelle 14 erzeugt eine modulierte Strahlung 15, wobei die Strahlung 15 durch den Betriebsstrom 16 und/oder die Betriebstemperatur 17 der Laser-Strahlungsquelle 14 moduliert wird. Die Laserstrahlung 15 kann durch eine zusätzliche Optik 18 gebündelt werden. Die gebündelte Laserstrahlung 19 tritt durch ein zweites Fenster 20 in die Messzelle 2 ein. Die Wellenlänge der von der Laser-Strahlungsquelle 14 erzeugten Laserstrahlung 15 ist auf eine Absorptionslinie der nachzuweisenden Substanz abgestimmt, so dass die Moleküle der nachzuweisenden Substanz durch die gepulste und gebündelte Laserstrahlung 19 innerhalb der Messzelle 2 angeregt wird. Die daraus resultierende Schallwelle innerhalb der Messzelle 2 wird durch das Mikrofon 3 aufgenommen. Das von dem Mikrofon 3 erzeugte Signal wird über einen Verstärker 4 an eine Auswerteeinheit 5 weitergeleitet. Die Auswerteeinheit 5 bestimmt mittels des verstärkten Mikrofonsignals die Konzentration der nachzuweisenden Substanz innerhalb des in der Messzelle 2 befindlichen Gasgemischs. Die Wellenlänge der von der Laser-Strahlungsquelle 14 abgegebenen Laserstrahlung 15 unterscheidet sich von der Wellenlänge bzw. dem Strahlungsspektrum der Infrarot-Strahlungsquelle 6.

Zur Untersuchung des in der Messzelle 2 befindlichen Gasgemischs werden in aufeinanderfolgenden Messvorgängen die Einzelkonzentrationen der in dem Gasgemisch befindlichen Einzelsubstanzen bestimmt. Bevorzugt werden die Einzelmessungen insgesamt dreimal durchgeführt, bevor die Auswerteeinheit 5 ein Ergebnis ausgibt.

Bei der Messvorrichtung 13 nach Figur 2 sind die Laser-Strahlungsquelle 14 und die Infrarot-Strahlungsquelle 6 an gegenüberliegenden Seiten der Messzelle 2 angeordnet und die Messzelle 2 weist zwei Fenster 9, 20 auf, die jeweils einer Strahlungsquelle 6, 14 zugewandt sind. Die zweite Messvorrichtung 13 ist so ausgestaltet, dass zu einem Zeitpunkt lediglich die Strahlung 11, 19 einer Strahlungsquelle 6, 14 in die Messzelle 2 gelangt.

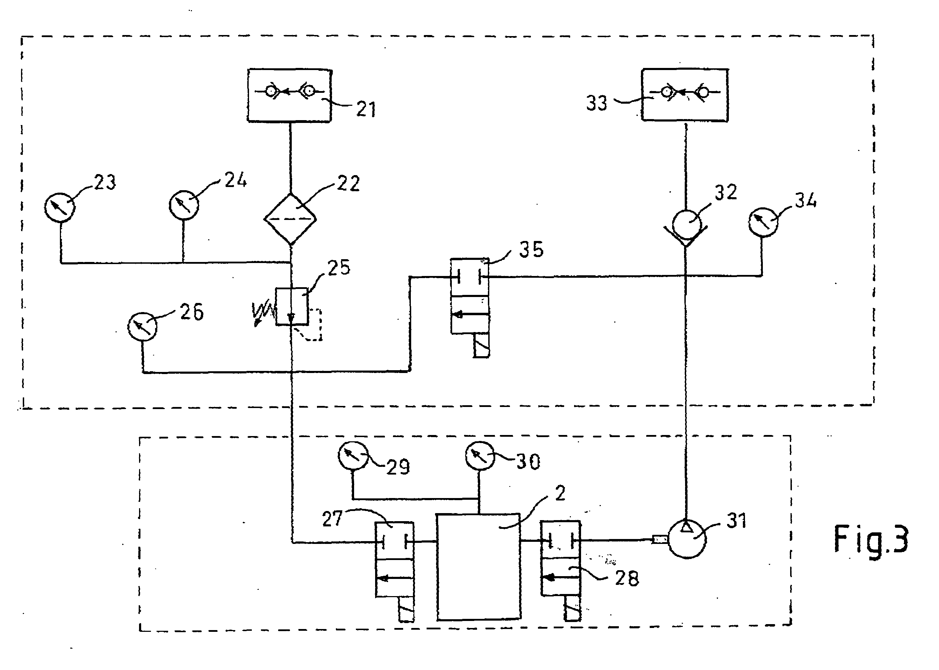

Figur 3 zeigt ein hydraulisches Schaltbild einer erfindungsgemäßen Vorrichtung. Das zu überprüfenden Gasgemisch wird aus einem Volumen über den Gaseingang 21 In die erfindungsgemäße Vorrichtung eingeleitet. Nachfolgend wird das zu analysierende Gasgemisch durch einen Eingangsfilter 22 geleitet, welches das Gasgemisch von Verunreinigungen wie beispielsweise Staubpartikeln reinigt. Nach dem Eingangsfilter wird die Temperatur und der Druck des einströmenden Gasgemischs mittels eines ersten Temperatursensors 23 bzw. eines ersten Drucksensors 24 gemessen. Der Druck des einströmenden Gasgemischs kann optional über einen (elektronischen) Druckregler 25 reduziert werden. Wird ein solcher Druckregler 25 eingesetzt, ist es zweckmäßig, den Druck des einströmenden Gasgemischs hinter dem Druckregler 25 mittels eines zweiten Drucksensors 26 zu überprüfen.

Nachfolgend wird das einströmende Gasgemisch über ein Eingangsventil 27 in die Messzelle 2 der erfindungsgemäßen Messvorrichtung eingeleitet. Der Messzelle vor- und nachgeschaltet wird ein erstens 27 und ein zweites 28 schaltbares Ventil. Hinter dem zweiten Ventil 28, bezogen auf die Strömungsrichtung des Gases, ist eine Pumpe 31 angeordnet, die bei geöffneten Ventilen 27 und 28 das zu analysierende Gas/Gasgemisch aus dem Volumen in die Messzelle 2 zieht bzw. mittels welcher ein gegebenenfalls zyklisches Spülen der Messzelle bewirkt wenden kann.

Um vor dem Beginn des erfindungsgemäßen Verfahrens die Verhältnisse in der Messzelle 2 zu überprüfen, verfügt diese über einen zweiten Temperatursensor 29 und einen dritten Drucksensor 30.

Nach erfolgreicher Durchführung des erfindungsgemäßen Verfahrens wird das in der Messzelle 2 befindliche Gasgemisch mittels der Pumpe 31 über das zweite Ventil 28 und einem vor einem Gasausgang 33 befindlichen Rückschlagventil 32 abgeleitet.

Nach einer bevorzugten Ausführungsform der Erfindung ist zwischen dem Gasausgang 33 und dem Gaseingang 21 ein Überbrückungsventil 35 angeordnet, vorzugsweise auf Seiten des Gasausgangs 33 zwischen der Pumpe 31 und dem Rückschlagventil 32 und seitens des Gaseingangs 21 zwischen dem Druckregler 25 und dem ersten Ventil 27. Dieses Überbrückungsventil 35 dient dazu, das aus der Messzelle 2 abgeleitete Gasgemisch erneut in die Messzelle 2 einzuleiten und die Messung zu wiederholen.

Zweckmäßigerweise ist hinter der Pumpe 31 ein vierter Drucksensor angeordnet, um die Druckverhältnisse ausgangsseitig zu überprüfen.

### Bezugszeichenliste:

- 1: erste Messvorrichtung
- 2: Messzelle
- 3: Mikrofon
- 4: Verstärker
- 5: Auswerteeinheit
- 6: IR-Strahlungsquelle
- 7: Zerhacker
- 8: Filter
- 9: Fenster
- 10: Strahlung
- 11: gepulste Strahlung
- 12: Filterelemente
- 13: zweite Messvorrichtung
- 14: Laser-Strahlungsquelle
- 15: Laserstrahlung
- 16: Betriebsstrom
- 17: Betriebstemperatur
- 18: Optik
- 19: gebündelte Laserstrahlung
- 20: zweites Fenster
- 21: Gaseingang
- 22: Eingangsfilter
- 23: erster Temperatursensor
- 24: erster Drucksensor
- 25: Druckregler
- 26: zweiter Drucksensor
- 27: erstes Ventil
- 28: zweites Ventil
- 29: zweiter Temperatursensor
- 30: dritter Drucksensor
- 31: Pumpe
- 32: Rückschlagventil
- 33: Gasausgang
- 34: vierter Drucksensor
- 35: Überbrückungsventil

## Patentansprüche

1. Verfahren zum Nachweisen mehrerer Substanzen eines Gasgemischs durch eine zeitlich aufeinander folgende Bestimmung der Einzelkonzentrationen der Substanzen unter Verwendung einer einzigen Messanordnung (1, 13), jeweils umfassend die Schritte:
Einschließen einer Probe des Gasgemischs in mindestens einer Messzelle (2),
Hindurchleiten einer modulierten Strahlung (11, 15, 19) durch die Messzelle (2), wobei die Wellenlänge der hindurchgeleiteten Strahlung (11, 15, 19) auf jeweils mindestens eine Absorptionslinie der Substanzen abgestimmt wird,
Detektieren der durch Absorption der Strahlung (11, 15, 19) erzeugten Schallwellen mit einem Mikrofon (3),
phasenempfindliches Verstärken des Mikrofonsignals, und
Bestimmen der Einzelkonzentration einer der Substanzen innerhalb des Gasgemischs durch Auswerten des verstärkten Mikrofonsignals in einer Auswerteeinheit (5),
wobei die Bestimmung der Einzelkonzentrationen der Substanzen unter Verwendung wenigstens zweier wahlweise aktivierbarer Strahlungsquellen (6, 14) und/oder durch Filterung eines von wenigstens einer Strahlungsquelle (6, 14) abgegebenen Strahlungsspektrums (10) durchgeführt werden.

2. Verfahren nach Anspruch 1, **dadurch gekennzeichnet, dass** die Strahlungsquellen (6, 14) jeweils eine Strahlung (10, 15) unterschiedlicher Wellenlänge abstrahlen oder dass wenigstens eine Strahlungsquelle (6, 14) eine Strahlung (10, 15) mit einem Strahlungsspektrum abstrahlt.

3. Verfahren nach Anspruch 1 oder 2, **dadurch gekennzeichnet, dass** die Strahlungsquellen (6, 14) wenigstens eine Laser-Strahlungsquelle (14) und/oder eine Infrarot-Strahlungsquelle (6) umfassen.

4. Verfahren nach einem der Ansprüche 1 bis 3, **dadurch gekennzeichnet, dass** die Strahlung (10, 15) wenigstens einer der Strahlungsquellen (6, 14) mittels des Betriebsstroms (16) und/oder der Betriebstemperatur (17) der Strahlungsquelle (6, 14) moduliert wird.

5. Verfahren nach einem der Ansprüche 1 bis 4, **dadurch gekennzeichnet, dass** die Strahlung (10, 15) wenigstens einer der Strahlungsquellen (6, 14) mittels eines Zerhackers (7) moduliert wird.

6. Verfahren nach einem der Ansprüche 1 bis 5, **dadurch gekennzeichnet, dass** die Strahlung (10,15) wenigstens einer der Strahlungsquellen (6, 14) mittels eines Filters (8) auf die Wellenlänge einer Absorptionslinie der nachzuweisenden Substanz begrenzt wird.

7. Verfahren nach Anspruch 6, **dadurch gekennzeichnet, dass** die Eigenschaften des Filters (8) an die Absorptionslinie der nachzuweisenden Substanz angepasst werden, beispielsweise in Form einer drehbar gelagerten Scheibe mit unterschiedlichen Filterelementen (12).

8. Verfahren nach einem der Ansprüche 1 bis 7, **dadurch gekennzeichnet, dass** das Gasgemisch als Isolier- und/oder Löschgas für elektrische Betriebsmittel verwendet wird.

9. Verfahren nach Anspruche 8, **dadurch gekennzeichnet, dass** wenigstens eine Zersetzungssubstanz des Isolier- und/oder Löschgases nachgewiesen wird, die sich über die Zeit bildet und/oder die durch die Beanspruchung des Isolier- und/oder Löschgases entsteht.

10. Verfahren nach einem der Ansprüche 8 oder 9, **dadurch gekennzeichnet, dass** die nachzuweisenden Substanzen eine oder mehrere der folgenden Substanzen umfassen: Schwefelhexafluorid, SF₆, Fluorwasserstoff, HF, Schwefeldioxid, SO₂, Wasser, H₂O, Kohlenmonoxid, CO, Kohlendioxid, CO₂, Methan, CH₄, Ethan, C₂H₆, Ethen, C₂H₄, Acetylen, C₂H₂.

11. Verfahren nach einem der Ansprüche 8 bis 10, **dadurch gekennzeichnet, dass** zuerst die Konzentration an Schwefelhexafluorld in dem Gasgemisch bestimmt wird.

12. Verfahren nach einem der Ansprüche 1 bis 11, **dadurch gekennzeichnet, dass** das Gasgemisch mehrfach überprüft wird, bevor ein Messergebnis angezeigt wird, vorzugsweise dreimal.

13. Verfahren nach einem der Ansprüche 1 bis 12, **dadurch gekennzeichnet, dass** die Messzelle in einer akustischen Resonanz betrieben wird.

14. Vorrichtung (1, 13) zur Ausführung des Verfahrens nach einem der Ansprüche 1 bis 12, umfassend:
wenigstens eine Messzelle (2) zur Aufnahme des zu überprüfenden Gasgemischs, wobei die Messzelle (2) wenigstens ein strahlungsdurchlässiges Fenster (9, 20) aufweist und im Wesentlichen gasdicht ist,
ein Innerhalb der Messzelle (2) befindliches Mikrofon (3) zur Aufnahme einer durch Absorption einer modulierten Strahlung erzeugten Schallwelle,
einen mit dem Mikrofon (3) verbundenen phasenempfindlicher Verstärker (4) zur Verstärkung der von dem Mikrofon (3) erzeugten Signale,
eine mit dem phasenempfindlichen Verstärker (4) verbundene Auswerteeinheit (5) zur Auswertung der von dem Verstärker (4) verstärkten Signale,
**dadurch gekennzeichnet, dass**
die Vorrichtung (1, 13) wenigstens zwei Strahlungsquellen (6, 14) und/oder wenigstens eine Strahlungsquelle (6, 14) mit einem Strahlungsspektrum und ein zwischen wenigstens einer Strahlungsquelle (6, 14) und der Messzelle (2) angeordnetes Filter (8) umfasst, wobei das Filter (8) das von der Strahlungsquelle (6, 14) abgegebene Strahlungsspektrum auf einen vorgebbaren/vorbestimmten Wert/Bereich beschränkt.

15. Vorrichtung (1, 13) nach Anspruch14, **dadurch gekennzeichnet, dass** zwischen wenigstens einer Strahlungsquelle (6, 14) und der Messzelle (2) ein Zerhacker (7) angeordnet ist.

16. Vorrichtung (1, 13) nach Anspruch 14 oder15, **dadurch gekennzeichnet, dass** die Strahlung (10, 15) wenigstens einer Strahlungsquelle (6, 14) durch den Betriebsstrom (16) und/oder der Betriebstemperatur (17) der Strahlungsquelle (6, 14) modulierbar ist.

17. Vorrichtung (1,13) nach einem der Ansprüche 14 bis16, **dadurch gekennzeichnet, dass** die Vorrichtung (1, 13) wenigstens zwei unterschiedliche Strahlungsquellen (6,14) umfasst, wobei die Strahlungsquellen (6, 14) eine Strahlung (10, 15) mit unterschiedlicher Wellenlänge und/oder unterschiedlichen Strahlungsspektren abstrahlen.

18. Vorrichtung (1, 13) nach Anspruch17, **dadurch gekennzeichnet, dass** wenigstens eine Strahlungsquelle (6, 14) als Laser-Strahlungsquelle (14) ausgebildet ist und/oder wenigstens eine Strahlungsquelle (6, 14) als Infrarot-Strahlungsquelle (6) ausgebildet ist.

19. Vorrichtung (1, 13) nach einem der Ansprüche 14 bis 18, **dadurch gekennzeichnet, dass** das Filter (8) veränderbar ist, vorzugsweise ist das Filter (8) als Drehscheibe ausgebildet und umfasst mehrere Filterelemente (12), die durch eine Drehung der Drehscheibe zwischen Messzelle (2) und Strahlungsquelle (6, 14) bewegbar sind.

20. Vorrichtung (1, 13) nach einem der Ansprüche 14 bis19, **dadurch gekennzeichnet, dass** die Vorrichtung (1, 13) eine Laserdioden-Strahlungsquelle (14) und eine breitbandige Infrarot-Strahlungsquelle (6) umfasst, wobei die beiden Strahlungsquellen (6, 14) an gegenüberliegenden Seiten der Messzelle (2) angeordnet sind und wobei die Messzelle (2) zwei strahlungsdurchlässige Fenster (9, 20) aufweist, die jeweils einer der Strahlungsquellen (6, 14) zugewandt sind.

21. Vorrichtung (1,13) nach einem der Ansprüche 14 bis 20, **dadurch gekennzeichnet, dass** die Vorrichtung (1, 13) zwei Messzellen (2) unterschiedlicher Größe umfasst, um unterschiedliche Konzentrationen der nachzuweisenden Substanzen jeweils in verschiedenen Messzellen nachzuweisen.

22. Vorrichtung (1, 13) nach Anspruch 21, **dadurch gekennzeichnet, dass** mittels der größeren Messzelle Konzentrationen von eins zu einer Million, ppm, nachweisbar sind und/oder dass mittels der kleineren Messzelle Konzentrationen von eins zu hundert, %, nachweisbar sind.

23. Vorrichtung (1, 13) nach einem der Ansprüche 21 bis 22, **dadurch gekennzeichnet, dass** die beiden Messzellen hintereinander oder parallel in Bezug auf die einfallende Strahlung angeordnet sind.
